# EUROPÄISCHE PATENTSCHRIFT

(11) **EP 0 452 548 B1**
(45) Veröffentlichungstag und Bekanntmachung des Hinweises auf die Patenterteilung: **19.01.1994**
(21) Anmeldenummer: 90122467.5
(22) Anmeldetag: 26.11.1990
(51) Int. Cl.: B62D 21/02, E04C 3/06

(54) **Träger einer Fahrzeug-Aufbaustruktur**
Beam for vehicle frame
Poutre pour chassis de véhicule automobile

(30) Priorität: 23.03.1990 DE 4009401
(43) Veröffentlichungstag der Anmeldung: 23.10.1991
(73) Patentinhaber: Dr.Ing.h.c. F. Porsche Aktiengesellschaft, 70435 Stuttgart (DE)
(72) Erfinder: Wurl, Willi, Dipl-Ing. (FH), W-7532 Niefern-Oeschelbronn 1 (DE)

(56) Entgegenhaltungen:
- FR-A- 2 597 056

## Beschreibung

Die Erfindung betrifft einen Träger für eine Fahrzeug- Aufbaustruktur gemäß dem Oberbegriff des Patentanspruchs 1.

Aus der EP-PS 0 146 716 geht eine Aufbaustruktur für einen Personenwagen hervor, dessen Träger durch kastenförmige Hohlprofile aus Leichtmetall gebildet werden. Die Hohlprofile sind im Strangpreßverfahren hergestellt.

Aufgabe der Erfindung ist es, einen Träger einer Aufbaustruktur, insbesondere einen benachbart eines Fahrzeugendbereiches angeordneten Längsträger so auszugestalten, daß er einerseits ein hohes Energieaufnahmevermögen bei einem Aufprallstoß aufweist und daß andererseits ein Pralldämpfer einer Stoßfängeranordnung in raumsparender Weise an den Längsträger anschließbar ist.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch den zentralen Rohrabschnitt ein Pralldämpfer in einfacher, raumsparender Weise im Längsträger aufgenommen ist und daß durch den zentralen Rohrabschnitt und die beiden äußeren, vorzugsweise etwa quadratischen Hohlprofilabschnitte ein gutes Faltenbeulverhalten des Längsträgers erreicht wird. Somit läßt sich bei einem Aufprallstoß eine hohe Energieaufnahme realisieren.

Durch die vorzugsweise etwa rechtwinkelig zueinander angeordneten Stege zwischen jedem Hohlprofilabschnitt und dem Rohrabschnitt, die etwa unter 45 % zu einer horizontalen Hilfsebene ausgerichtet sind, wird ein funktionsgerechtes Zusammenfalten des Längsträgers bei einem Aufprallstoß gewährleistet. Durch die bevorzugte kontinuierliche Verjüngung der beiden seitlichen Begrenzungskanten des Längsträgers nach unten hin können die Längsträger in einfacher Weise von oben in ein sie umgebendes Knotenelement aus Guß eingesetzt werden.

Der in den zentralen Rohrabschnitt eingesetzte Pralldämpfer verläuft mit geringem radialen Abstand zum außenliegenden Rohrabschnitt. Bei einem Schrägaufprall auf den Längsträger erfolgt somit eine Führung des Pralldämpfers durch den Rohrabschnitt.

Ein Ausführungsbeispiel der Erfindung ist in der Zeichnung dargestellt und wird im folgenden näher beschrieben.

Es zeigt:
- Fig. 1: in perspektivischer Darstellung einen Endbereich einer Aufbaustruktur eines Personenwagens mit einem Längsträger,
- Fig. 2: einen Horizontalschnitt durch die endseitige Aufbaustruktur,
- Fig. 3: einen Vertikalschnitt durch den Längsträger der Aufbaustruktur.

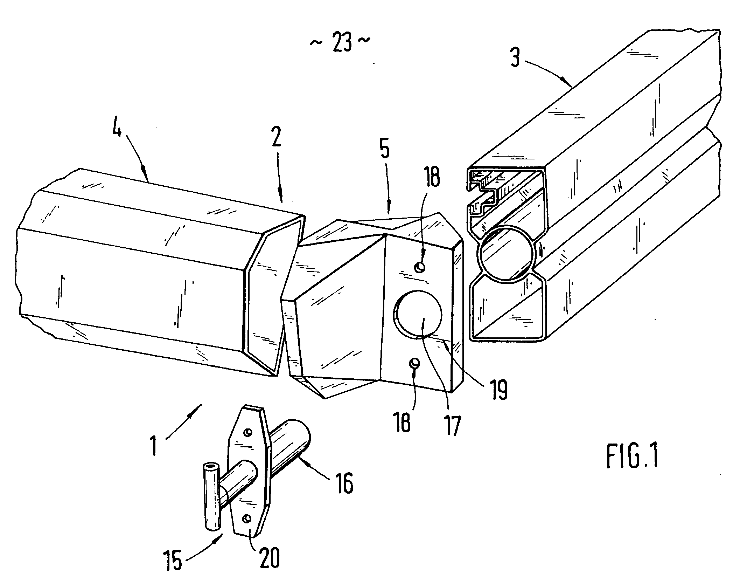

In Fig. 1 ist ein vorderer Endbereich 1 einer Aufbaustruktur 2 eines Personenwagens gezeigt, der im dargestellten Bereich aus einem Längsträger 3 und einem Querträger 4 besteht. Der Längsträger 3 und der Querträger 4 werden durch ein im Strangpreßverfahren hergestelltes Hohlprofil aus Leichtmetall (Aluminium, Aluminiumlegierung, Magnesium oder dgl.) gebildet und sind über ein Knotenelement 5 miteinander verbunden.

Das Knotenelement 5 wird beispielsweise durch ein Gußteil gebildet, das aus Leichtmetall (Aluminium, Aluminiumlegierung, Magnesium oder dgl.) gefertigt ist.

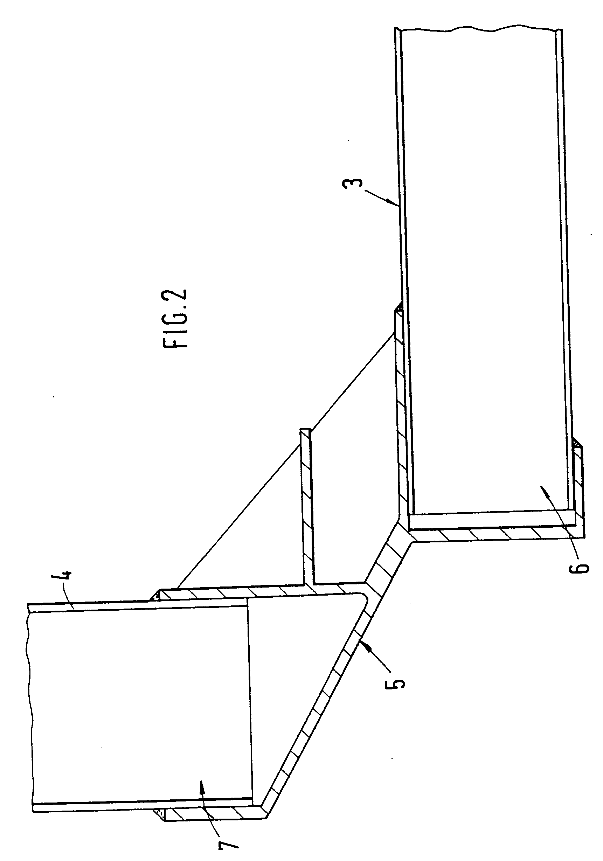

Gemäß Fig. 2 umschließt das Knotenelement 5 Endbereiche 6, 7 des eingelegten Längsträgers 3 sowie des Querträgers 4. Das Knotenelement 5 ist zusätzlich über eine mechanische Verbindung (Schrauben, Nieten oder dgl), durch Kleben oder eine thermische Verbindung (Schweißen) mit den Trägern 3, 4 verbunden.

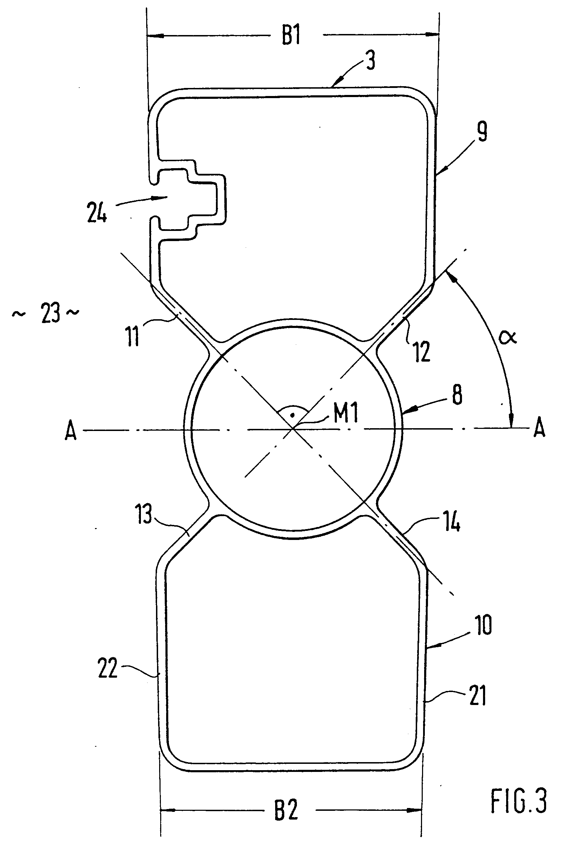

Eine hohe Energieaufnahme des Längsträgers 3 bei einem Aufprallstoß und ein raumsparender Anschluß einer Stoßfängeranordnung an den Längsträger 3 wird dadurch erzielt, daß der Längsträger 3 aus einem zentralen Rohrabschnitt 8 und zwei an gegenüberliegenden Seiten des Rohrabschnittes 8 angeordneten äußeren Hohlprofilabschnitten 9, 10 besteht, wobei die Hohlprofilabschnitte 9, 10 über schräg verlaufende Stege 11, 12, 13, 14 an den Rohrabschnitt 8 abgeschlossen sind. Gemäß Fig. 3 sind die Hohlprofilabschnitte 9, 10 unterhalb und oberhalb des zentralen Rohrabschnittes 8 angeordnet.

Der Rohrabschnitt 8 weist einen kreisförmigen Querschnitt auf und ist so dimensioniert, daß ein Pralldämpfer 15 mit Spielsitz abschnittsweise innerhalb des Rohrabschnittes 8 aufgenommen werden kann. Ein zylindrischer Abschnitt 16 des Pralldämpfers 15 wird durch eine Öffnung 17 des Knotenelementes 5 in den Rohrabschnitt 8 des Längsträgers 3 eingeschoben und ist am Knotenelement 5 unter Vermittlung von nicht näher dargestellten Befestigungselementen (z.B. Schrauben) in Lage gehalten. Die Öffnung 17 und die Gewindebohrungen 18 sind an einer vertikalen Wand 19 des Knotenelementes 5 vorgesehen, wobei an der Außenseite der vertikalen Wand 19 eine Halteplatte 20 des Pralldämpfers 15 anliegt. Die mit dem Pralldämpfer 15 verbundene Stoßfängervorrichtung ist nicht näher dargestellt.

Die beiden Stege 11, 12 bzw. 13, 14 jedes Hohlprofilabschnittes 9 bzw. 10 verlaufen etwa rechtwinkelig zueinander und unter einem Winkel α von etwa 45° zu einer horizontalen Hilfsebene A-A.

Eine ideelle Verlängerung aller Stege 11, 12, 13, 14 führt durch den Mittelpunkt M1 des zentralen Rohrabschnittes 8.

Die beiden äußeren Hohlprofilabschnitte 9, 10 sind -im Querschnitt gesehenvorzugsweise annähernd quadratisch ausgebildet, sie können aber auch einen rechteckigen Querschnitt aufweisen. Entsprechend Fig. 3 weisen die äußeren Hohlprofilabschnitte 9, 10 eine etwas größere Breite auf als der zentrale Rohrabschnitt 8, d.h., die Hohlprofilabschnitte 9, 10 überragen den Rohrabschnitt 8 zu beiden Querseiten hin.

Die seitlichen Begrenzungskanten 21, 22 des Längsträgers 3 verjüngen sich (gemäß Fig. 3) nach unten hin kontinuierlich und zwar von der Breite B1 auf die Breite B2. Es besteht jedoch auch die Möglichkeit, daß die beiden Begrenzungskanten 21, 22 parallel zueinander ausgerichtet sind.

Am oberen Hohlprofilabschnitt 9 ist auf der einem Motorraum 23 zugekehrten Seite eine durchgehende hinterschnittene Längsnut 24 vorgesehen, in die örtlich nicht gezeigte Gewindeplatten zum Befestigen von Aggregaten oder dgl. einsetzbar sind. Sämtliche Wandabschnitte des im Strangpreßverfahren hergestellten Längsträgers 3 weisen eine gleichbleibende Materialdicke auf, die abhängig von der erforderlichen Energieaufnahme und den strangpreßtechnischen Möglichkeiten ist.

## Patentansprüche

1. Träger für eine Fahrzeug-Aufbaustruktur (2), der durch ein aus Leichtmetall hergestelltes Strangpreßprofil gebildet wird, das, in eingebautem Zustand in Vertikalrichtung gesehen, mehrere Hohlprofilabschnitte aufweist und der aus einem zentralen Rohrabschnitt (8) und zwei an gegenüberliegenden Seiten des Rohrabschnittes (8) angeordneten, äußeren Hohlprofilabschnitten (9, 10) besteht, dadurch gekennzeichnet, daß der zentrale Rohrabschnitt einen Kreisförmigen Querschnitt hat, wobei in den zentralen Rohrabschnitt (8) ein Pralldämpfer (15) einer Stroßfängeranordnung mit Spielsitz eingesetzt ist und daß jeder Hohlprofilabschnitt (9, 10) über zwei schräg verlaufende Stege (11,12, 13, 14) an den Rohrabschnitt (8) angeschlossen ist, dergestalt, daß jeder Steg (11, 12, 13, 14) unter einem Winkel α von etwa 45° zu einer horizontalen Hilfsebene (A-A) verläuft und daß eine ideelle Verlängerung jedes Steges (11, 12, 13, 14) den Mittelpunkt (M1) des Rohrabschnittes (8) schneidet.

2. Träger nach Anspruch 1, dadurch gekennzeichnet, daß die beiden Stege (11, 12 bzw. 13, 14) jedes Hohlprofilabschnittes (9, 10) etwa rechtwinklig zueinander verlaufen.

3. Träger nach Ansruch 1, dadurch gekennzeichnet, daß die beiden Hohlprofilabschnitte (9, 10) vorzugsweise einen etwa quadratischen Querschnitt aufweisen.

4. Träger nach Anspruch 1, dadurch gekennzeichnet, daß alle Wandabschnitte des Strangpreßprofils eine gleichbleibende Materialdicke aufweisen.

5. Träger nach Anspruch 1, dadurch gekennzeichnet, daß die beiden äußeren Hohlprofilabschnitte (9, 10) eine größere Breite aufweisen als der zentrale Rohrabschnitt (8).

6. Träger nach Anspruch 1, dadurch gekennzeichnet, daß ein zylindrischer Abschnitt (16) des Pralldämpfers mit Spielsitz innerhalb des Rohrabschnittes (8) aufgenommen wird.

7. Träger nach Anspruch 1, dadurch gekennzeichnet, daß sich die Querschnitte der äußeren Hohlprofilabschnitte nach unten hin Kontinuierlich verjüngen.

## Claims

1. Support for a vehicle superstructure (2), which is formed by an extruded profile produced from light metal which in the installed state, as seen in the vertical direction, has a plurality of hollow profile sections, and which comprises a central tubular section (8) and two outer hollow profile sections (9, 10) arranged on opposite sides of the tubular section (8), characterized in that the central tubular section has a circular cross-section, an impact damping means (15) of a shock absorber arrangement being inserted with play in the central tubular section (8), and in that each hollow profile section (9, 10) is connected to the tubular section (8) by way of two obliquely running webs (11, 12, 13, 14) in such a way that each web (11, 12, 13, 14) runs at an angle α of approximately 45° with respect to a horizontal auxiliary plane (A-A), and in that an imaginary extension of each web (11, 12, 13, 14) intersects the centre point (M1) of the tubular section (8).

2. Support according to Claim 1, characterized in that the two webs (11, 12 and 13, 14 respectively) of each hollow profile section (9, 10) run approximately at a right angle to one another.

3. Support according to Claim 1, characterized in that the two hollow profile sections (9, 10) preferably have an approximately square cross-section.

4. Support according to Claim 1, characterized in that all the wall sections of the extruded profile have a constant material thickness.

5. Support according to Claim 1, characterized in that the two outer hollow profile sections (9, 10) have a larger width than the central tubular section (8).

6. Support according to Claim 1, characterized in that the cylindrical section (16) of the impact damping means is received with play within the tubular section (8).

7. Support according to Claim 1, characterized in that the cross-sections of the outer hollow profile sections taper downwards continuously.

## Revendications

1. Longeron, pour châssis (2) de véhicule automobile, formé par un profilé d'extrusion fabriqué en métal léger, présentant, observé en direction verticale, à l'état monté, plusieurs sections de profilé creux, et composé d'une section tubulaire centrale (8) et de deux sections de profilé creux extérieures (9, 10), disposées sur des côtés opposés de la section tubulaire (8), caractérisé en ce que la section tubulaire centrale présente une section transversale circulaire, un amortisseur de choc (15) d'un dispositif pare-chocs étant disposé dans la section tubulaire centrale (8) avec un siège présentant un jeu, et en ce que chaque section à profilé creux (9, 10) est raccordée à la section tubulaire (8) par l'intermédiaire de nervures (11, 12, 13, 14) orientées obliquement, de telle sorte que chaque nervure (11, 12, 13, 14) s'étend en faisant un angle α d'à peu près 45° par rapport à un plan auxiliaire horizontal (A-A), et en ce qu'un prolongement imaginaire de chaque nervure (11, 12, 13, 14) coupe le centre (M1) de la section tubulaire (8).

2. Longeron selon la revendication 1, caractérisé en ce que les deux nervures (11, 12 respectivement 13, 14) de chaque section a profilé creux (9, 10) s'étendent a peu près perpendiculairement l'une par rapport à l'autre.

3. Longeron selon la revendication 1, caractérisé en ce que les deux sections a profilé creux (9, 10) ont de préférence une section transversale à peu près carrée.

4. Longeron selon la revendication 1, caractérisé en ce que toutes les sections de paroi du profil extrudé ont une épaisseur de matière constante.

5. Longeron selon la revendication 1, caractérisé en ce que les deux sections à profilé creux extérieures (9, 10) ont une largeur supérieure à celle de la section tubulaire centrale (8).

6. Longeron selon la revendication 1, caractérisé en ce qu'une section cylindrique (16) de l'amortisseur de choc est reçue avec un siège avec du jeu à l'intérieur de la section tubulaire (8).

7. Longeron selon la revendication 1, caractérisée en ce que les sections transversales des sections à profilé creux vont en s'effilant de façon continue en direction du bas.
